# DEMANDE DE BREVET EUROPEEN

(11) **EP 1 666 951 A2**
(43) Date de publication de la demande: **07.06.2006**
(21) Numéro de dépôt: 05300408.1
(22) Date de dépôt: 25.05.2005
(51) Int. Cl.: G02C 1/06, G02C 11/02

(54) **Lunettes du type sans cerclage**

(30) Priorité: 28.05.2004 FR 0451070
(71) Demandeur: Axebo, 39150 St Laurent en Grandvaux (FR)
(72) Inventeur: Ponard, Gérard, 39130, DOUCIER (FR)
(74) Mandataire: Rhein, Alain

(57) **Abrégé**

Lunettes (10), du type sans cerclage, comprenant deux verres (11, 12), reliés entre eux par un nez (13), et deux branches latérales (14, 15) montées chacune sur l'un des deux verres (11, 12), caractérisées en ce qu'elles comportent un élément décoratif (16) comprenant deux enjoliveurs (16a, 16b) présentant la forme de cadre de dimensions sensiblement analogues à celles desdits verres (11, 12) et destinés à être fixés, au travers de moyens de fixation appropriés, respectivement en regard de chacun desdits verres (11, 12).

## Description

La présente invention concerne des lunettes sans cerclage constituées de deux verres assemblés entre eux par un nez et munis de deux branches latérales.

Bien que l'avantage des lunettes dépourvues de cerclage soit défini par leur incontestable sobriété, on a pu constater que si elles conviennent à une certaine catégorie de personnes, souhaitant, notamment pour des raisons professionnelles, disposer d'un accessoire très discret, le style quelque peu sévère qu'elles confèrent à leurs porteurs déplait à de nombreuses autres personnes.

En effet, à l'heure actuelle, les lunettes constituent souvent des accessoires de mode, dont les utilisateurs possèdent parfois plusieurs modèles, et qui sont choisis non seulement en fonction de la morphologie du visage, et des matériaux utilisés, mais également pour leur originalité, et leur fantaisie.

Ainsi, la plupart des fabricants de lunettes s'efforcent actuellement d'élargir l'offre en matière de modèles de lunettes, de sorte à se trouver capables de proposer à leurs clients des produits répondant plus étroitement aux attentes spécifiques de chacun d'entre eux.

De nombreuses solutions ont d'ores et déjà été proposées dans ce sens, parmi lesquelles celles notamment qui prévoient la possibilité de transformer, au gré de ses envies, l'apparence d'une paire de lunettes, en venant rapporter sur une monture de base, une autre monture amovible.

Néanmoins, l'inconvénient d'une telle pratique réside dans le fait que les possibilités de transformations d'aspect sont strictement limitées à la couleur de la monture amovible, qui, venant s'emboîter par encliquetage dans la monture d'origine, doit nécessairement présenter la même forme et les mêmes dimensions que cette dernière.

Une autre solution, présentée au travers du document EP 1 251 388, consiste encore à équiper les lunettes de montures constituées de deux demi-faces, à savoir une demi-face supérieure apte à soutenir les deux verres, et une demi-face inférieure amovible comprenant deux arcades pouvant présenter différentes formes et couleurs, choisies par l'utilisateur dans une gamme prédéterminée, lesdites arcades pouvant être aisément troquées les unes contre les autres, par l'utilisateur, pour modifier l'aspect général des lunettes.

L'objet de la présente invention est de proposer une autre solution permettant d'élargir l'éventail des modèles de lunettes, au travers de lunettes constituées de moyens simples, peu coûteux, assurant la perspective d'une très large gamme de modèles, de matériaux, de formes, de couleurs multiples, qui concilient à la fois le caractère sobre des lunettes sans cerclage et les possibilités en matière de créativité qu'offrent les lunettes avec cerclage.

Ainsi, l'invention concerne des lunettes, du type sans cerclage, comprenant deux verres reliés entre eux par un nez, et deux branches latérales montées chacune sur l'un des deux verres, caractérisées en ce qu'elles comportent un élément décoratif comprenant deux enjoliveurs présentant la forme de cadre de dimensions sensiblement analogues à celles desdits verres et destinés à être fixés, au travers de moyens de fixation appropriés, respectivement en regard de chacun desdits verres.

La présente invention concerne également les caractéristiques qui ressortiront au cours de la description qui va suivre, et qui devront être considérées isolément ou selon toutes leurs combinaisons possibles.

Cette description se rapportant à des exemples de réalisation, donnés à titre indicatif et non limitatif, fera mieux comprendre comment l'invention peut être réalisée, en référence aux dessins annexés, dans lesquels :
- la figure 1 représente une vue de face d'une variante de réalisation d'une paire de lunettes selon l'invention,
- la figure 2 représente une autre variante de réalisation d'une paire de lunettes selon l'invention
- la figure 3 représente un troisième mode de réalisation d'une paire de lunettes de type sans cerclage,
- la figure 4 représente une coupe selon A-A de la paire de lunettes schématisée à la figure 3.

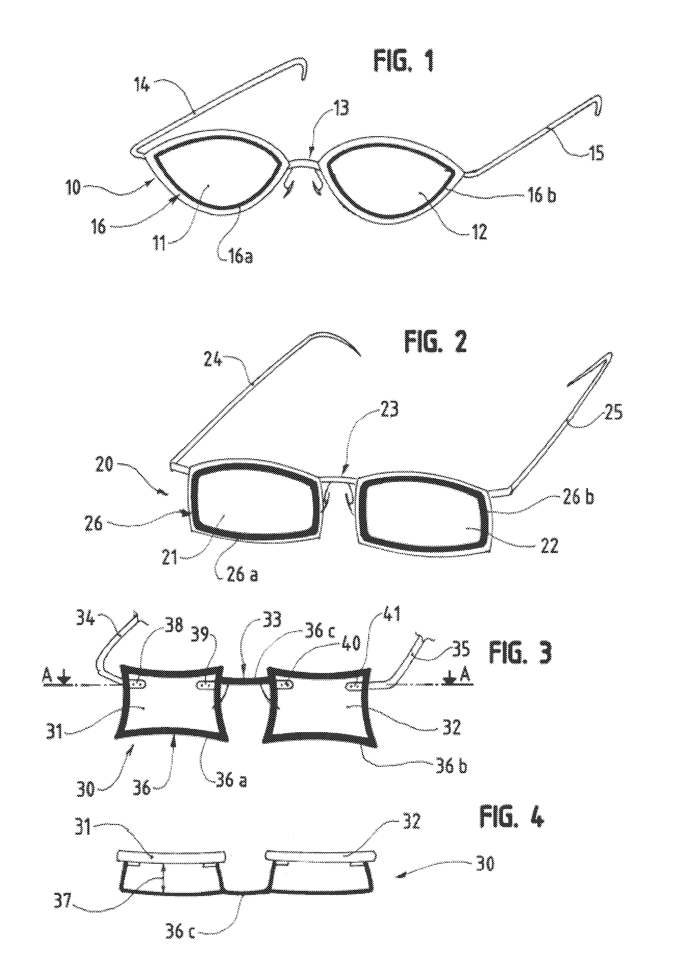

Les paires de lunettes 10, 20, 30, schématisées aux figures 1, 2 et 3 sont respectivement constituées de deux verres 11 et 12, 21 et 22, 31 et 32 reliés entre eux respectivement par des nez 13, 23, 33, des branches latérales 14 et 15, 24 et 25, 34 et 35 étant encore montées respectivement sur les verres 11 et 12, 21 et 22, 31 et 32.

Selon l'invention, chacune de ces paires de lunettes 10, 20, 30 comprend par ailleurs un élément décoratif 16, 26, 36 constitué à chaque fois d'une paire d'enjoliveurs 16a et 16b, 26a et 26b, 36a et 36b, présentant la forme de cadres, fixés au regard des verres 11 et 12, 21 et 22, 31 et 32, à l'avant de ces derniers.

Bien qu'aucun des exemples représentés ne soit concerné, on peut également tout à fait envisager de positionner les enjoliveurs 16a, 16b, 26a, 26b, 36a, 36b à l'arrière des verres 11, 12, 21, 22, 31, 32, c'est à dire entre ces derniers et les yeux d'un utilisateur.

Tel que visible sur les figures 1, 2, 3, les éléments décoratifs 16, 26, 36 peuvent prendre diverses formes, indépendamment de celles des verres 11, 12, 21, 22, 31, 32, dont ils peuvent également épouser ou non les contours.

Ils sont de préférence conçus à l'aide des matériaux classiquement utilisés pour fabriquer des montures de lunettes, à savoir par exemple du titane, de l'écaille, des matières synthétiques, permettant de proposer un très important choix d'aspects et de coloris.

D'après une variante de réalisation de l'invention, les éléments décoratifs 16, 26 schématisés aux figures 1, et 2 comprennent deux enjoliveurs, respectivement 16a, 16b, et 26a, 26b prévus indépendants l'un de l'autre, tandis que l'élément décoratif 36 schématisé à la figure 3 comprend deux enjoliveurs 36a, 36b reliés entre eux par un pontet 36c.

Avantageusement, selon une caractéristique de l'invention, les enjoliveurs 16a, 16b, ou 26a, 26b, ou 36a, 36b sont prévus réversibles, de sorte que chacun d'entre eux peut être adapté sur l'un ou l'autre des verres 11, 12, ou 21, 22, ou 31, 32, ce qui facilite le travail d'assemblage des lunettes et permet par conséquent d'en réduire notablement le coût.

D'autre part, différents types de moyens de fixation peuvent être employés pour positionner les éléments décoratifs 16, 26, 36 en regard des verres 11, 12, 21, 22, 31, 32.

Ainsi, selon une première caractéristique, les moyens de fixation peuvent être du type apte à autoriser une fixation des enjoliveurs 16a, 16b, ou 26a, 26b directement sur les verres correspondants 11, 12, 21, 22, 31, 32.

Selon une autre variante, les moyens de fixation employés sont du type apte à permettre la fixation des deux enjoliveurs 16a, 16b, ou 26a, 26b, ou 36a, 36b respectivement au niveau de l'une ou l'autre des deux branches latérales 14, 15 ou, 24, 25, ou 34, 35 et/ou au niveau dudit nez 13, 23, 33.

Par ailleurs, afin de permettre davantage de créativité et une multiplication du nombre de modèles de lunettes conformes à l'invention, on peut également envisager l'utilisation de moyens de fixation qui soient propres à obtenir un contact entre les enjoliveurs 16a, 16b, 26a, 26b, 36a, 36b et les verres 11, 12, 21, 22, 31, 32.

A cet effet, il peut par exemple s'agir de points de colle, ou d'éléments mécaniques permettant d'obtenir un emboîtement entre les enjoliveurs 16a, 16b, ou 26a, 26b et les rebords des verres 11, 12, 21, 22, 31, 32, ou encore de moyens de fixation par vissage, clipsage ou autre.

Dans le même esprit, selon une autre forme de réalisation de l'invention, concernant notamment l'exemple représenté à la figure 3, les moyens de fixation peuvent par ailleurs encore être du type propre à ménager, tel que visible à la figure 4, un interstice 37 entre lesdits enjoliveurs 36a, 36b et lesdits verres 31, 32.

D'autre part, les enjoliveurs 16a, 16b, 26a, 26b, 36a, 36b, peuvent encore comporter une ou plusieurs languettes de fixation destinées à coopérer avec certaines formes de moyens de fixation, notamment du type vis, pour leur assemblage, le cas échéant sur les verres 11, 12, 21, 22, 31, 32, les nez 13, 23, 33 et/ou les branches latérales 14, 15, 24, 25, 34, 35.

Ceci concerne notamment la paire de lunettes 30 selon l'invention représentée à la figure 3, dont chaque enjoliveur 36a, 36b comporte deux languettes 38, 39, 40, 41 destinées à permettre sa fixation au niveau respectivement des branches latérales 34 ,35, et du nez 33.

Dans les formes de réalisation de lunettes selon l'invention dans lesquelles les languettes sont destinées à permettre une fixation des enjoliveurs directement au niveau des verres, leur emplacement peut être avantageusement variable, et leur présence peut ainsi contribuer à un certain effet esthétique.

Bien entendu, il est également possible d'envisager des formes de réalisation dans lesquelles l'élément décoratif est constitué de deux enjoliveurs reliés par un pontet, à l'exemple de la variante représentée à la figure 3, mais dans lesquelles chaque enjoliveur ne comporte qu'une seule languette pour une fixation à chaque fois uniquement au niveau de l'une des branches latérales ou uniquement au niveau du nez.

## Revendications

1. Lunettes (10, 20, 30), du type sans cerclage, comprenant deux verres (11, 12 ; 21, 22 ; 31, 32), reliés entre eux par un nez (13 ; 23 ; 33), et deux branches latérales (14, 15 ; 24, 25 ; 34, 35) montées chacune sur l'un des deux verres (11, 12 ; 21, 22 ; 31, 32), **caractérisées en ce qu'**elles comportent un élément décoratif (16 ; 26 ; 36) comprenant deux enjoliveurs (16a, 16b ; 26a, 26b ; 36a, 36b) présentant la forme de cadre de dimensions sensiblement analogues à celles desdits verres (11, 12 ; 21, 22 ; 31, 32) et destinés à être fixés, au travers de moyens de fixation appropriés, respectivement en regard de chacun desdits verres (11, 12 ; 21, 22 ; 31, 32).

2. Lunettes (10 ; 20 ; 30) selon la revendication 1, **caractérisées en ce que** les enjoliveurs (16a, 16b ; 26a, 26b) sont indépendants l'un de l'autre.

3. Lunettes (10 ; 20 ; 30) selon la revendication 1, **caractérisées en ce que** les enjoliveurs (36a ; 36b) sont reliés entre eux au travers d'un pontet (36c).

4. Lunettes (10 ; 20 ; 30) selon l'une quelconque des revendications précédentes, **caractérisées en ce que** les enjoliveurs (16a, 16b ; 26a, 26b ; 36a, 36b) sont prévus réversibles, de sorte à autoriser le positionnement de chacun d'entre eux sur l'un ou l'autre des deux verres (11, 12 ; 21, 22 ; 31, 32), quelle que soit leur forme et celles des deux verres (11, 12 ; 21, 22 ; 31, 32)

5. Lunettes (10 ; 20 ; 30) selon l'une quelconque des revendications précédentes, **caractérisées en ce que** les moyens de fixation sont du type apte à permettre la fixation des deux enjoliveurs (16a, 16b ; 26a, 26b ; 36a, 36b) directement au niveau de chacun des deux verres (11, 12 ; 21, 22 ; 31, 32).

6. Lunettes (10 ; 20 ; 30) selon l'une quelconque des revendications 1 à 4, **caractérisées en ce que** les moyens de fixation sont du type apte à permettre la fixation des deux enjoliveurs (16a, 16b ; 26a, 26b ; 36a, 36b) respectivement au niveau de l'une ou l'autre des deux branches latérales (14, 15 ; 24, 25 ; 34, 35) et/ou au niveau du nez (13 ; 23 ; 33).

7. Lunettes (10 ; 20 ; 30) selon l'une quelconque des revendications précédentes, **caractérisées en ce que** les moyens de fixation sont du type apte à autoriser un contact entre lesdits enjoliveurs (16a, 16b ; 26a, 26b ; 36a, 36b) et les verres (11, 12 ; 21, 22 ; 31, 32).

8. Lunettes (10 ; 20 ; 30) selon l'une quelconque des revendications 1 à 6, **caractérisées en ce que** les moyens de fixation sont du type apte à ménager un interstice entre les enjoliveurs (16a, 16b ; 26a, 26b ; 36a, 36b) et les verres (11, 12 ; 21, 22 ; 31, 32).

9. Lunettes (10 ; 20 ; 30) selon l'une quelconque des revendications précédentes, **caractérisées en ce que** les enjoliveurs (16a, 16b ; 26a, 26b ; 36a, 36b) comportent une ou plusieurs languettes (38, 39, 40, 41) aptes à coopérer avec les moyens de fixation.

10. Lunettes (10 ; 20 ; 30) selon l'une quelconque des revendications précédentes, **caractérisées en ce que** les enjoliveurs (16a, 16b ; 26a, 26b ; 36a, 36b) présentent des formes différentes de celles des verres (11, 12, 21, 22, 31, 32).
